# FASCICULE DE BREVET EUROPEEN

(11) **EP 2 340 971 B1**
(45) Date de publication et mention de la délivrance du brevet: **23.03.2016**
(21) Numéro de dépôt: 10194872.7
(22) Date de dépôt: 14.12.2010
(51) Int. Cl.: B60T 7/04, B60T 7/10, B60T 13/74, B60T 7/08, B60T 8/17

(54) **Procédé de gestion du freinage de parc dans un système de freinage de véhicule équipé de freins électriques**
Steuerverfahren der Parkbremsung in einem Bremssystem eines Fahrzeugs, das mit elektrischen Bremsen ausgestattet ist
Method for managing parking brakes in a braking system for vehicles equipped with electric brakes

(30) Priorité: 24.12.2009 FR 0959587
(43) Date de publication de la demande: 06.07.2011
(60) Demande divisionnaire: 12150396.5
(73) Titulaire: Messier-Bugatti-Dowty, 78140 Vélizy-Villacoublay (FR)
(72) Inventeur: Mudry, Stéphane, 92130, Issy Les Moulineaux (FR); Ragot, Frédéric, 92100, Boulogne-Billancourt (FR); Vaney, Jean-Baptiste, 75016, Paris (FR); Colin, Emmanuel, 75014, Paris (FR)
(74) Mandataire: Parzy, Benjamin Alain

(56) Documents cités:
- EP-A1- 1 391 362
- WO-A2-2008/049798
- DE-B3- 10 361 042
- US-A1- 2005 077 783

## Description

L'invention concerne un procédé de gestion du freinage de parc dans un système de freinage de véhicule équipé de freins électriques.

### ARRIERE-PLAN DE L'INVENTION

Les freins électriques de véhicule, notamment un aéronef, comportent en général au moins un actionneur électrique qui comprend un poussoir actionné par un moteur électrique pour appliquer sélectivement un effort sur des éléments de friction du frein.

En vue de bloquer le véhicule par exemple lorsque celui-ci est à l'arrêt sur un parking, on place le poussoir de l'actionneur dans une position dans laquelle il exerce sur les éléments de friction un effort commandé puis on bloque le poussoir dans cette position de sorte qu'il continue à exercer un effort de parc sur les éléments de friction, ce qui permet de couper l'alimentation du moteur et ainsi de diminuer la consommation électrique du frein.

Cependant, compte tenu des variations dimensionnelles des composants du frein en fonction de la température, l'effort de parc varie au cours du temps et il est donc nécessaire de prévoir un ajustement de la position du poussoir.

Il est connu, notamment des documents US 6 959 794, et FR 2 880 603, de réaliser un ajustement de l'effort de parc appliqué à des instants donnés soit en utilisant un capteur d'effort monté sur l'un des composants du système de freinage et en assurant un maintien de l'effort à une valeur constante au moyen d'une boucle fermée agissant sur la position du poussoir en fonction de la valeur de l'effort. Cet ajustement peut encore se faire par la mise en oeuvre d'un procédé dit de retour à zéro comportant les étapes de : débloquer le poussoir, rétracter le poussoir jusqu'à un effort nul puis l'avancer à nouveau jusqu'à ce qu'il exerce l'effort requis qui est mesuré à partir de l'un des paramètres de fonctionnement de l'actionneur, par exemple le courant d'alimentation du moteur électrique de l'actionneur.

Ces deux moyens sont consommateurs d'énergie, ce qui pose un problème dans la mesure où pendant le freinage de parc le système de freinage est alimenté uniquement par la batterie du véhicule.

Il est également connu du document US 6 959 794 précité d'ajuster la position du poussoir selon une table dite d'ajustement direct qui entraine une variation de position du poussoir en fonction seulement du temps écoulé depuis la mise en freinage de parc. Afin que le frein de parc reste efficace quelles que soient les circonstances il est alors nécessaire que la table d'ajustement corresponde à une compensation des effets d'un freinage d'urgence, c'est-à-dire une situation dans laquelle une forte dilatation des composants survient peu de temps après la mise en frein de parc. Cette dilatation provoque en particulier un allongement très important du tube de torsion qui porte les disques. Le poussoir étant verrouillé dans une position fixe par rapport au tube de torsion, un allongement du tube de torsion provoque une diminution de l'effort de freinage. Pour compenser cette diminution il est donc nécessaire de prévoir une table d'ajustement direct assurant un déplacement du poussoir de façon importante dans le sens d'un serrage.

L'ajustement étant le même quelles que soient les circonstances qui précèdent la mise en frein de parc, on risque dans certains cas de procéder à des ajustements avec une fréquence ou un niveau trop élevé, de sorte que ces ajustements sont inutiles, et notamment après des freinages à très faibles énergie pour lesquelles la dilatation thermique du tube de torsion sera très faible. Ces ajustements inutiles contribuent à vieillir prématurément les actionneurs.

Un procédé de gestion de freinage de parc selon le préambule de la revendication 1 est connu du document US 2005/077783.

### OBJET DE L'INVENTION

L'invention a pour objet un procédé de gestion du freinage de parc assurant un effort de frein de parc minimisant le risque de vieillissement prématuré de l'actionneur.

### BREVE DESCRIPTION DE L'INVENTION

En vue de la réalisation de ce but, on propose un procédé de gestion d'un freinage de parc dans un système de freinage pour véhicule équipé d'au moins un frein électrique comportant au moins un actionneur électromécanique qui comprend un poussoir actionné par un moteur électrique pour appliquer sélectivement un effort sur des éléments de friction du frein, le procédé comportant la les étapes :
- d'établir une série de tables d'ajustement direct du freinage de parc correspondant à des situations de freinage à différents niveaux d'énergie,
- d'effectuer lors d'un freinage de parc une sélection d'une table d'ajustement direct en relation avec une situation de freinage précédant la mise en freinage de parc,
- d'ajuster de façon directe un effort de frein de parc selon la table d'ajustement direct sélectionnée.

Ainsi, en sélectionnant la table d'ajustement en fonction d'un freinage précédent, il est possible d'appliquer l'ajustement qui conduira à respecter l'effort minimal de parc sans risquer d'induire dans le frein des efforts importants lors du refroidissement du frein, ce qui contribue à augmenter la durée de vie des actionneurs. En particulier, on profite de la réduction de la fréquence d'ajustement et/ou du niveau d'effort de chaque ajustement après des freinages de faible intensité n'induisant que des dilatations thermiques faibles.

Selon l'invention, la sélection d'une table d'ajustement direct est effectuée en relation avec un historique des freinages réalisés sur une période de temps précédant la mise en freinage de parc, l'historique des freinages étant réalisé selon des niveaux d'énergie des freinages. Ceci permet donc d'anticiper de façon précise les variations dimensionnelles de la structure de freinage.

Selon un autre aspect de l'invention pour chaque freinage selon un niveau énergie donné différentes tables d'ajustement direct sont établies en fonction de différentes températures ambiantes et lors de la sélection d'une table d'ajustement direct il est tenu compte de la température ambiante.

### BREVE DESCRIPTION DES DESSINS

L'invention sera mieux comprise à la lumière de la description qui suit en référence aux figures des dessins annexés parmi lesquelles :
- la figure 1 est une vue schématique d'un aéronef comportant plusieurs roues freinées ;
- la figure 2 est une vue en coupe d'une roue équipée d'un frein à actionneurs électriques ;
- la figure 3 est un graphe de l'évolution dans le temps de l'effort de parc d'un actionneur sans ajustement pour différents niveaux d'énergie de freinage
- la figure 4 est un graphe illustrant la réalisation d'une table d'ajustement direct.
- la figure 5 est un graphe de l'évolution dans le temps de la position du poussoir et de l'effort de parc correspondant d'un actionneur selon le deuxième mode de mise en oeuvre du procédé de l'invention.

### DESCRIPTION DETAILLEE DE L'INVENTION

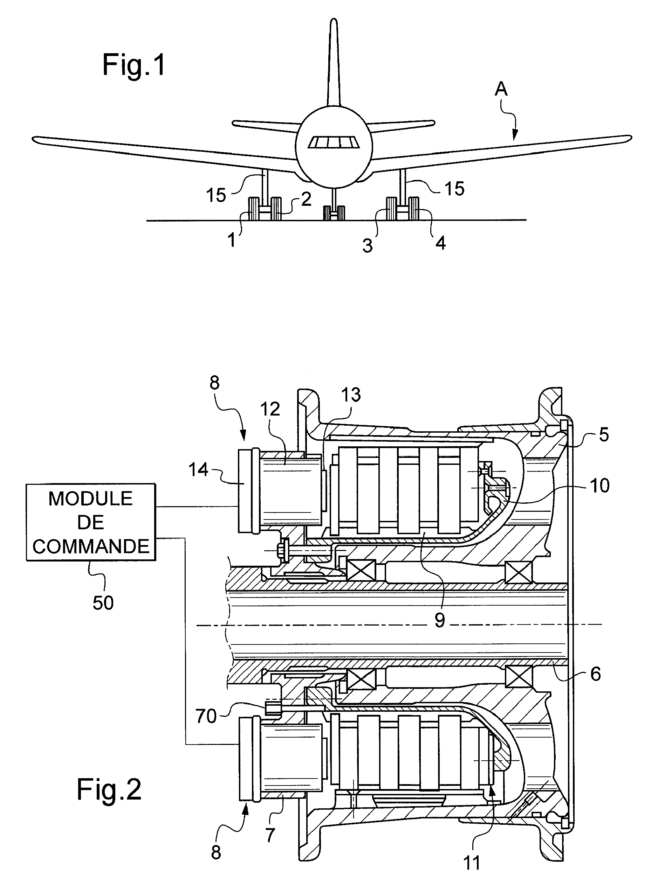

Le procédé de l'invention est détaillé ici en application à un aéronef A tel que celui illustré à la figure 1 qui ici comporte quatre roues freinées numérotées de 1 à 4 portées par des atterrisseurs 15. Bien sûr, l'invention s'applique à un aéronef comportant un nombre quelconque de roues freinées.

L'une de ces roues freinées est illustrée sur la figure 2. Chacune des roues comporte une jante 5 adaptée à recevoir un pneumatique (non représenté ici) et montée à rotation sur un essieu 6 porté par l'un des atterrisseurs 15 de l'aéronef. Sur l'essieu 6 est montée une couronne 7 portant des actionneurs 8. Sur la couronne 7 est fixé un tube de torsion 9 qui s'étend dans la jante 5 pour se terminer par un appui 10. La couronne 7, et donc le tube de torsion 9, sont arrêtés en rotation vis à vis de l'essieu 6 par des moyens d'arrêt non représentés ici.

Entre l'appui 10 et les actionneurs 8 s'étend une pile de disques 11 composée de rotors qui sont solidaires en rotation de la jante 5 et de stators qui sont solidaires en rotation du tube de torsion 9.

Chacun des actionneurs 8 comporte un corps 12 dans lequel un poussoir 13 est monté pour se déplacer linéairement en regard de la pile de disques 11 sous l'action d'un moteur électrique contenu dans le corps 12, afin d'appliquer sur la pile de disques 11 un effort commandé de pression qui, en induisant des efforts de friction entre les rotors et les stators de la pile de disques, contribue à ralentir la rotation de la jante 5, et donc à freiner l'aéronef A.

Chacun des actionneurs 8 comporte un organe de blocage 14 adapté à bloquer le poussoir 13 dans la position où il se trouve lors de l'activation de l'organe de blocage 14. Le système de freinage comporte un module de commande 50 adapté à faire fonctionner les actionneurs 8 des freins soit dans un mode commandé pour lequel chacun des actionneurs est commandé pour appliquer sélectivement un effort sur la pile de disques 11 associée en réponse à une consigne de freinage, soit dans un mode de parc dans lequel les actionneurs 8 sont bloqués dans une position à l'aide de l'organe de blocage 14 pour laquelle le poussoir 13 exerce sur la pile de disques 11 associée un effort de parc. Dans le mode de parc, l'effort de parc est ainsi tenu sans l'aide du moteur électrique, ce qui permet de couper l'alimentation électrique de ce dernier.

Pour passer au mode de parc, lorsque l'aéronef est au parking, le module de commande 50 commande tout d'abord les poussoirs 13 des actionneurs 8 pour qu'ils appliquent sur la pile de disques 11 associée un effort commandé égal à un effort nominal de parc, puis le module de commande 50 active les organes de blocage 14 pour bloquer les poussoirs 13. L'alimentation des moteurs électriques des actionneurs peut alors être coupée. Les poussoirs 13 ainsi bloqués continuent à exercer sur les piles de disques 11 un effort de parc qui immobilise l'aéronef.

Cependant, ainsi qu'il a été rappelé en préambule la dilatation relative des composants du système de freinage, et en particulier la dilatation relative du tube de torsion 9 et des disques 11 provoque des variations de l'effort effectivement appliqué.

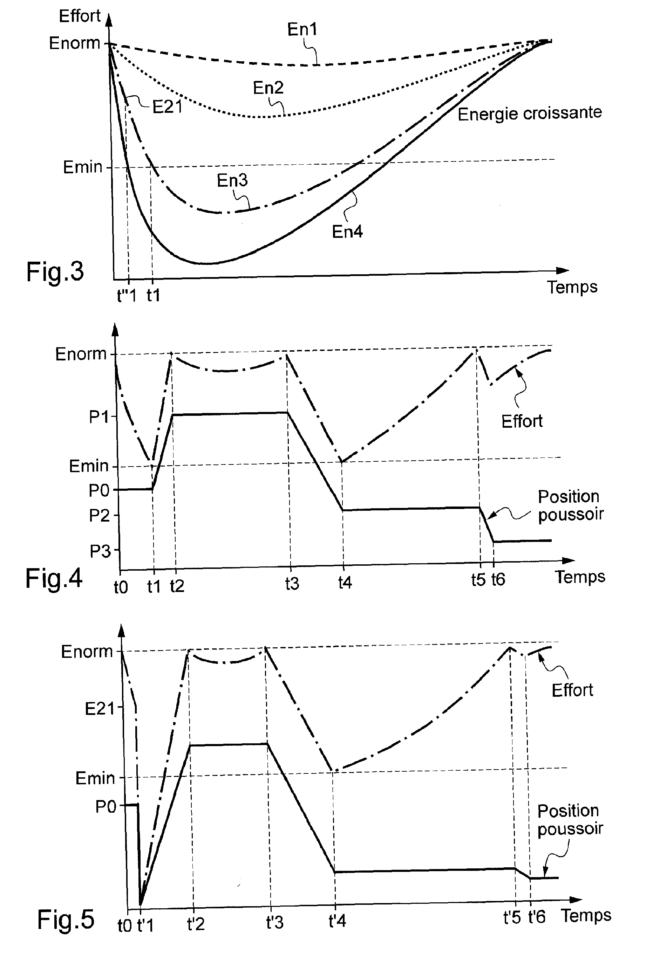

La figure 3 illustre ces variations selon quatre courbes En1, En2, En3, et En4 qui correspondent à des niveaux d'énergie croissants du freinage précédant immédiatement la mise en freinage de parc. À titre d'exemple, la courbe En1 correspond à un freinage de faible niveau d'énergie, par exemple lors de déplacements effectués à vitesse lente avec principalement un freinage final destiné à arrêter le véhicule. La courbe En2 correspond à un freinage de niveau d'énergie un peu plus élevé, par exemple lors de déplacements effectués à vitesse lente avec que des freinages successifs avant le freinage final. La courbe En3 correspond à un freinage de niveau d'énergie élevée, par exemple lorsque le véhicule est arrêté plusieurs fois de suite dans un temps réduit. La courbe En4 correspond à un freinage de niveau d'énergie maximal telle qu'il résulte d'un arrêt brutal du véhicule alors que celui-ci était lancé à pleine vitesse.

Sur le graphe de la figure 3, on a représenté les évolutions dans le temps de l'effort de parc E exercé par l'un des actionneurs 8 sur la pile de disques 11 associée. Le temps t0 correspond au moment où le poussoir 13 de l'actionneur est bloqué par l'organe de blocage 14 dans une position dans laquelle il exerce un effort égal à l'effort nominal de parc Enom. Comme expliqué précédemment, l'effort de parc E a tendance à diminuer sous l'effet des dilatations. Dans l'exemple illustré par la figure 3 les courbes de freinage de niveaux d'énergie En1 et En2 restent comprises entre le la valeur de l'effort minimal requis Emin et la valeur de l'effort nominal de parc Enom. Dans ces deux cas il n'est donc pas nécessaire de procéder à un ajustement. En revanche, en ce qui concerne les courbes de freinage de parc En3 et En4, si on laisse l'effort de parc évoluer au gré des dilatations, il ressort de la figure 3 que celui-ci va passer en dessous d'une valeur minimum Emin nécessaire pour empêcher le véhicule de bouger.

Selon l'invention, on établit une série de tables d'ajustement direct du freinage de parc qui correspondent à des situations de freinage à différents niveaux d'énergie. Chaque table d'ajustement direct comporte à des instants déterminés une correction directe de la position du poussoir de façon à ramener l'effort de frein de parc à une valeur proche de ou égale à l'effort nominal Enom dans un sens d'augmentation de l'effort de frein de parc lorsque l'ajustement doit compenser une réduction de l'effort de frein de parc due à une dilatation du frein, et de façon à ramener l'effort de frein de parc à une valeur proche de ou égale à l'effort minimal Emin dans le sens d'une réduction de l'effort de frein de parc lorsque l'ajustement doit compenser une augmentation de l'effort de frein de parc due à une rétraction du frein.

À titre d'exemple la figure 4 illustre l'élaboration d'une table d'ajustement direct pour la courbe de freinage de parc de niveau d'énergie En3. Sur cette figure l'évolution de la position du poussoir a été représentée en trait continu tandis que l'évolution de l'effort de frein de parc correspondant est représentée en trait mixte.

À l'instant initial t0 le poussoir est dans la position p0 à laquelle correspond un effort de frein de parc nominal Enom. À partir de la courbe d'effort de la figure 3 on détermine l'instant t1 pour lequel la courbe d'effort atteint le niveau d'effort minimum Emin. Une commande est insérée dans la table d'ajustement direct pour qu'à cet instant le poussoir soit manoeuvré dans un sens d'augmentation de l'effort jusqu'à ce que le poussoir atteigne la position p1 pour laquelle l'effort de frein de parc est égal à l'effort nominal Enom. Cette position est atteinte à l'instant t2 à partir duquel l'évolution de l'effort de frein de parc se poursuit selon la partie correspondante de la courbe En3 de la figure 3.

À partir de la courbe En3 de la figure 3 on détermine l'instant t3 pour lequel, compte tenu de la forme de la courbe de la figure 3, l'effort de frein de parc atteint à nouveau la valeur nominale Enom. Une commande est insérée dans la table d'ajustement direct pour qu'à cet instant le poussoir soit rétracté jusqu'à atteindre une position p2 pour laquelle l'effort de frein de parc atteint la valeur minimale Emin. Cette position est atteinte à l'instant t4 à partir duquel l'évolution de l'effort de frein de parc se poursuit selon la partie correspondante de la courbe En3 de la figure 3.

Une nouvelle commande de rétraction du poussoir est insérée dans la table de l'ajustement direct à l'instant t5 pour lequel l'effort de frein de parc atteint un nouveau la valeur nominale Enom. À cet instant le poussoir est une fois encore rétracté jusqu'à l'instant t6 auquel il atteint la position p3 cette fois juste nécessaire pour que l'effort de frein de parc soit ramené à une valeur telle que lorsque la température du frein est devenue stable l'effort de frein de parc soit sensiblement égal à l'effort nominal Eom.

Pour des raisons de clarté du dessin les écarts de temps entre les instants t1-t2, t3-t4, et t5-t6 ont été volontairement exagérés sur la figure 4.

Une table d'ajustement direct est établie de façon analogue pour différents niveaux d'énergie de freinage. De préférence pour chaque niveau d'énergie de freinage différentes tables d'ajustement direct sont élaborées pour différentes températures ambiantes.

Selon l'invention le procédé de gestion d'un freinage de parc comprend l'étape d'effectuer lors d'un freinage de parc une sélection d'une table d'ajustement direct en relation avec une situation de freinage précédant la mise en freinage de parc et d'ajuster de façon directe un effort de frein de parc selon la table d'ajustement direct sélectionnée.

Selon un premier mode de mise en oeuvre préféré de ce procédé on établit un historique des niveaux d'énergie des freinages réalisés préalablement à la mise en freinage de parc, et la sélection d'une table d'ajustement est effectuée en fonction de cet historique de freinage, de préférence en tenant également compte de la température ambiante. À cet effet le véhicule est de préférence équipé d'une thermosonde 70. Lorsque l'historique des freinages détermine un niveau d'énergie intermédiaire entre deux tables d'ajustement direct, l'ajustement direct est de préférence effectué selon la table d'ajustement direct de niveau d'énergie immédiatement supérieur.

La figure 5 illustre un second mode de mise en oeuvre du procédé selon l'invention. Selon ce mode de mise en oeuvre une première table d'ajustement direct, de préférence une table de niveau d'énergie élevé et plus précisément la table d'ajustement direct de niveau d'énergie le plus élevé, est sélectionnée et est appliquée pendant un temps d'application initial prédéterminé. La première table peut être sélectionnée au moyen du premier mode de mise en oeuvre détaillé ci-dessus.

Dans l'exemple illustré par la figure 5, la première table d'ajustement direct sélectionnée correspond à la courbe de freinage de niveau d'énergie En4 de la figure 3 et le temps d'application initiale est le temps compris entre l'instant t0 et un instant t'1 pour lequel l'effort de frein de parc est égal à l'effort minimal Emin (voir figure 3). Dans l'exemple illustré pour lequel les conditions de freinage préalable à la mise en freinage de parc correspondent à la courbe d'énergie En3, l'effort de frein de parc réellement atteint est l'effort E21 donné par la courbe d'énergie En3.

À cet instant on procède à un premier ajustement, par exemple ici selon un procédé de retour à zéro, c'est-à-dire comportant les étapes de :
- débloquer le poussoir 13 ;
- faire reculer le poussoir 13 jusqu'à ce qu'il ne soit plus en contact avec la pile de disques 11 ;
- faire avancer le poussoir 13 jusqu'à une position pour laquelle l'effort de frein de parc atteint la valeur nominale Enom comme illustré par l'instant t'2 sur la figure 5. Le changement réel de position du poussoir est alors comparé avec que les changements théoriques de position tels qu'ils ressortent des tables d'ajustement direct après un temps d'application égal au temps d'application initial. La seconde table d'ajustement direct sélectionnée est celle pour laquelle le changement réel de position du poussoir est identique au changement théorique de position. Des ajustements directs sont ensuite effectués selon la table d'ajustement direct sélectionnée comme illustré par la figure 5.

Le procédé décrit ci-dessus peut être appliqué à tous les actionneurs de l'aéronef, soit un par un, soit simultanément. Dans ce dernier cas cependant, on veillera à ce que l'effort total généré par tous les actionneurs de l'aéronef ne descende pas en dessous d'un minimum qui remettrait en cause l'immobilité de l'aéronef.

Bien entendu l'invention n'est pas limitée aux modes de mise en oeuvre décrit et on peut y apporter des variantes de réalisation sans sortir du cadre de l'invention tel que défini par les revendications. En particulier Le procédé de l'invention est applicable à des freins munis d'actionneurs asservis en position. Pour exercer un effort de parc E sur ce type d'actionneur, on fait venir le poussoir 13 au contact de la pile de disques 11, on relève une position de contact du poussoir 13, et on déplace le poussoir 13 à partir de cette position de contact d'une distance donnée correspondant à l'effort commandé désiré compte tenu d'une raideur du frein.

Bien que l'on ait indiqué que lors d'une étape d'ajustement, on remonte l'effort de parc à son niveau nominal, on pourra mettre en oeuvre d'autres stratégies, comme remonter l'effort de parc à un niveau légèrement supérieur à l'effort nominal afin de diminuer le nombre d'étapes d'ajustement. A l'inverse, plutôt que d'établir les tables d'ajustement en référence à l'effort Enom, on peut envisager de faire des ajustements à un effort intermédiaire entre Enom et Emin, quitte à augmenter la fréquence des ajustements. En effet, des ajustements à effort élevés (Enom) sont plus susceptibles d'endommager l'actionneur que des ajustements plus nombreux à effort moindre.

On peut également prévoir différentes tables d'ajustement direct en fonction du poids du véhicule, le seuil d'effort minimal étant abaissé lorsque le véhicule est vide ou en charge partielle.

## Revendications

1. Procédé de gestion d'un freinage de parc dans un système de freinage pour véhicule équipé d'au moins un frein électrique comportant au moins un actionneur électrique (8) qui comprend un poussoir (13) actionné par un moteur électrique pour appliquer sélectivement un effort sur des éléments de friction (11) du frein, le procédé comportant les étapes de :
- d'établir une série de tables d'ajustement direct du freinage de parc correspondant à des situations de freinage à différents niveaux d'énergie,
- d'effectuer lors d'un freinage de parc une sélection d'une table d'ajustement direct en relation avec une situation de freinage précédant la mise en freinage de parc, et
- d'ajuster de façon directe un effort de freinage de parc selon la table d'ajustement direct sélectionnée ;
**caractérisé en ce que** le procédé comporte les étapes :
- d'établir un historique des freinages réalisés préalablement à la mise en freinage de parc, l'historique des freinages étant réalisé selon des niveaux d'énergie des freinages, et
- d'effectuer la sélection d'une table d'ajustement direct en fonction de l'historique des freinages.

2. Procédé selon la revendication 1 dans lequel l'historique des freinages détermine un niveau d'énergie intermédiaire entre deux tables d'ajustement direct, l'ajustement direct est effectué selon la table d'ajustement direct de niveau d'énergie immédiatement supérieur.

3. Procédé selon la revendication 1 **caractérisé en ce qu'**il comporte les étapes :
- d'établir pour chaque niveau d'énergie de freinage différentes tables d'ajustement direct en fonction d'une température ambiante, et
- d'effectuer la sélection de la table d'ajustement direct en fonction de la température ambiante mesurée lors de la mise en freinage de parc.

## Patentansprüche

1. Verfahren zum Steuern einer Parkbremsung in einem Bremssystem für ein Fahrzeug, das mit mindestens einer elektrischen Bremse ausgestattet ist, die mindestens einen elektrischen Aktor (8) umfasst, der einen Stößel (13) umfasst, der von einem Elektromotor betätigt wird, um selektiv eine Kraft auf Reibelemente (11) der Bremse aufzubringen, wobei das Verfahren die Schritte umfasst:
- Erstellen einer Reihe von Tabellen zum direkten Einstellen der Parkbremsung, die Bremssituationen mit unterschiedlichen Energieniveaus entsprechen,
- Treffen, während einer Parkbremsung, einer Auswahl einer Tabelle zum direkten Einstellen entsprechend einer Bremssituation, die der Parkbremsung vorausgeht, und
- direktes Einstellen einer Parkbremskraft gemäß der ausgewählten Tabelle zum direkten Einstellen;
**dadurch gekennzeichnet, dass** das Verfahren die Schritte umfasst:
- Erstellen einer Historie der Bremsungen, die vor der Parkbremsung durchgeführt wurden, wobei die Historie der Bremsungen gemäß den Energieniveaus der Bremsungen realisiert wird, und
- Treffen der Auswahl einer Tabelle zum direkten Einstellen in Abhängigkeit der Historie der Bremsungen.

2. Verfahren nach Anspruch 1, wobei die Historie der Bremsungen ein zwischen zwei Tabellen zum direkten Einstellen liegendes Energieniveau bestimmt, die direkte Einstellung gemäß der Tabelle zum direkten Einstellen des unmittelbar höheren Energieniveaus erfolgt.

3. Verfahren nach Anspruch 1, **dadurch gekennzeichnet, dass** es die Schritte umfasst:
- Erstellen für jedes Bremsenergieniveau von verschiedenen Tabellen zum direkten Einstellen in Abhängigkeit von einer Umgebungstemperatur, und
- Treffen der Auswahl der Tabelle zum direkten Einstellen in Abhängigkeit von der bei der Parkbremsung gemessenen Umgebungstemperatur.

## Claims

1. A method of managing parking braking in a braking system for a vehicle fitted with at least one electric brake including at least one electric actuator having a pusher actuated by an electric motor for selectively applying a force against friction elements of the brake, wherein the method comprises the steps of:
establishing a series of direct adjustment tables for parking braking, corresponding to braking situations at different energy levels;
· when applying parking braking, selecting a direct adjustment table corresponding to a braking situation preceding the application of parking braking; and
directly adjusting a parking braking force in application with the selected direct adjustment table ;
**characterized in that** the method comprises the steps of :
· establishing a history of braking operations performed prior to applying parking braking, the braking history being organized depending on braking energy levels ; and
· selecting a direct adjustment table as a function of the braking history.

2. A method according to claim 1, wherein when the braking history determines an energy level that is intermediate between two direct adjustment tables, direct adjustment is performed in application of the direct adjustment table having the immediately higher energy level.

3. A method according to claim 1, comprising the steps of:
· establishing for each braking energy level different direct adjustment tables as a function of ambient temperature; and
· selecting the direct adjustment table as a function of the measured ambient temperature when applying the parking braking.
